# EUROPÄISCHE PATENTSCHRIFT

(11) **EP 2 511 558 B1**
(45) Veröffentlichungstag und Bekanntmachung des Hinweises auf die Patenterteilung: **15.06.2016**
(21) Anmeldenummer: 12163853.0
(22) Anmeldetag: 12.04.2012
(51) Int. Cl.: F16D 55/227

(54) **Scheibenbremse**
Disc brake
Frein à disque

(30) Priorität: 14.04.2011 DE 102011017122
(43) Veröffentlichungstag der Anmeldung: 17.10.2012
(73) Patentinhaber: KNORR-BREMSE Systeme für Schienenfahrzeuge GmbH, 80809 München (DE)
(72) Erfinder: Lehneis, Michael, 81669 München (DE)
(74) Vertreter: Mattusch, Gundula

(56) Entgegenhaltungen:
- EP-A1- 1 903 243
- DE-A1- 4 119 928
- GB-A- 1 089 987
- US-A- 3 357 528
- US-A- 4 511 020

## Beschreibung

Bei einer solchen Scheibenbremse, die auch als Schiebesattel-Scheibenbremse bezeichnet wird, ist der Bremssattel auf Führungsholmen des Bremsträgers bei einer Bremsung verschiebbar geführt.

In Nichtfunktion der Scheibenbremse, also in ungebremster Stellung, liegt der Bremssattel am Endanschlag des Bremsträgers an, während sich der Bremssattel bei einer Bremsung aufgrund des sich einstellenden Kraftflusses vom Endanschlag löst und den reaktionsseitigen Bremsbelag gegen die Bremsscheibe führt, so dass beide Bremsbeläge bremsend an der Bremsscheibe anliegen. Beim Lösen der Bremsung wird der Bremssattel durch Rückstellfedern wieder an den Endanschlag verschoben.

Die Funktionsweise einer Schiebesattel-Scheibenbremse ist hinlänglich bekannt, so dass auf deren ausführliche Beschreibung verzichtet wird.

Bei einer Erstmontage des Bremssattels müssen vorhandene Toleranzen zwischen dem festen Endanschlag und der Bremsscheibe ausgeglichen werden, um ein symmetrische und/oder ein möglichst kleines Belagspiel zwischen den Bremsbelägen und der Bremsscheibe zu erreichen.

Hierzu wird nach der Montage zunächst der Abstand beider Bremsbeläge zur Bremsscheibe, das sogenannte Belagspiel gemessen. Bei einer Differenz beider Abstände, also bei einer asymmetrischen Anordnung der Bremsbeläge zur Bremsscheibe wird der Bremssattel wieder demontiert und zum Differenzausgleich werden Passscheiben zwischen dem Endanschlag und dem Bremssattel angebracht. Danach muss der Bremssattel mit den Bremsbelägen erneut montiert werden.

Allerdings ist diese umständliche Art der Einstellung nur mit einem erheblichen Zeit- und damit Kostenaufwand verbunden, der einer stets geforderten Kostenoptimierung auch bei Montagearbeiten entgegensteht.

Aus der US 4 511 020 A ist eine Scheibenbremse bekannt, die neben zwei Führungsholmen einen weiteren, in einen Teil des Bremsträgers eingedrehten Führungsbolzen aufweist, der in einer Bohrung des Bremssattels geführt ist und eine zusätzliche Stabilisierung bildet.

In der EP 1 903 243 A1 ist eine Scheibenbremse offenbart, bei der ein Anschlag durch einen Bund eines Führungsholms gebildet wird und der in einer Endstellung an einer Schulter einer gestuften Bohrung einer Führungsbuchse des Bremssattels anliegt. Diese Konstruktion dient ausschließlich dazu, den Verschiebeweg des Bremssattels zu begrenzen, um so zu verhindern, dass beispielsweise Dichtungen oder dergleichen beschädigt werden, wenn der Bremssattel gegenüber dem Bremsträger bei verschlissenen Bremsbelägen zu weit in Richtung des Bremsträgers verschoben wird.

Die DE 41 19 928 A1 zeigt und beschreibt gleichfalls eine Scheibenbremse, bei der, entgegen einer gattungsgemäßen, ausschließlich eine Rückstelleinrichtung thematisiert ist, die in einem Gleitlager angeordnet ist, mit einem Führungsholm, der mit einem Bremsträger verbunden ist.

Der Erfindung liegt die Aufgabe zugrunde, eine Scheibenbremse der gattungsgemäßen Art so weiterzuentwickeln, dass mit geringem konstruktivem Aufwand eine einfache und kostengünstige insbesondere Symmetrie-Einstellung des Bremssattels möglich ist.

Diese Aufgabe wird durch eine Scheibenbremse mit den Merkmalen des Anspruchs 1 gelöst.

Während wie geschildert, eine gleichmäßige, d.h. symmetrische Positionierung der beiden Bremsbeläge zur Bremsscheibe bisher nur bei demontiertem Bremssattel möglich war, folgt dieser nun nur der Verstellung des Endanschlages, der, gemäß der Erfindung, axial verstellbar ist.

Naturgemäß kann dies in wesentlich kürzerer Zeit erfolgen als dies bei der aus dem Stand der Technik bekannten Konstruktion möglich ist. Damit ergeben sich durchaus bemerkenswerte Kostenvorteile, aber auch eine Handhabungserleichterung bei der Montage der Scheibenbremse.

Nach einer vorteilhaften Weiterbildung der Erfindung ist ein Arretiermittel vorgesehen, mit dem der Endanschlag in einer Endstellung festsetzbar ist, so dass sich der Endanschlag auch bei fahrbedingten Erschütterungen aus seiner bestimmten Position nicht lösen kann.

Die axiale Einstellbarkeit des Endanschlages wird bevorzugt durch ein Gewinde erreicht, d.h., der Endanschlag ist mit einem Schraubenschaft versehen, der in eine Gewindebohrung des Bremsträgers oder des Bremssattels eingedreht ist.

Prinzipiell denkbar ist jedoch auch eine Exzenterverstellung, mit der der Endanschlag ebenso wie bei der Gewindeausbildung stufenlos verstellbar ist.

Der Endanschlag kann zur Verdrehsicherung in einem Klemmklotz gehalten werden, der als separates Bauteil, mittels einer Konterschraube, mit dem Bremsträger verbunden ist. Dabei ist der Endanschlag mit einem glatten, gewindefreien Fortsatz durch den Klemmklotz geführt und darin festgeklemmt.

Zur Minimierung bzw. Verhinderung von Klappergeräuschen während des Fahrbetriebs, verursacht durch die Anlage des Bremssattels am Endanschlag, weist der Endanschlag ein Dämpfungselement auf, beispielsweise in Form eines Kunststoffstopfens, der die Anschlagseite für den Bremssattel bildet, wobei der Kunststoffstopfen in den Gewindeschaft eingesteckt ist und dort reib- oder stoffschlüssig, beispielsweise durch Verkleben, gehalten ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Anordnung einer Scheibenbremse an einem Bremsträger in einer Draufsicht
- Figuren 2-6: jeweils ein Ausführungsbeispiel der Erfindung in einem Schnitt, gemäß der Linie X-X in Figur 1
- Figur 7: eine Einzelheit der Anordnung, gesehen in Richtung des Pfeiles VII in Figur 6.

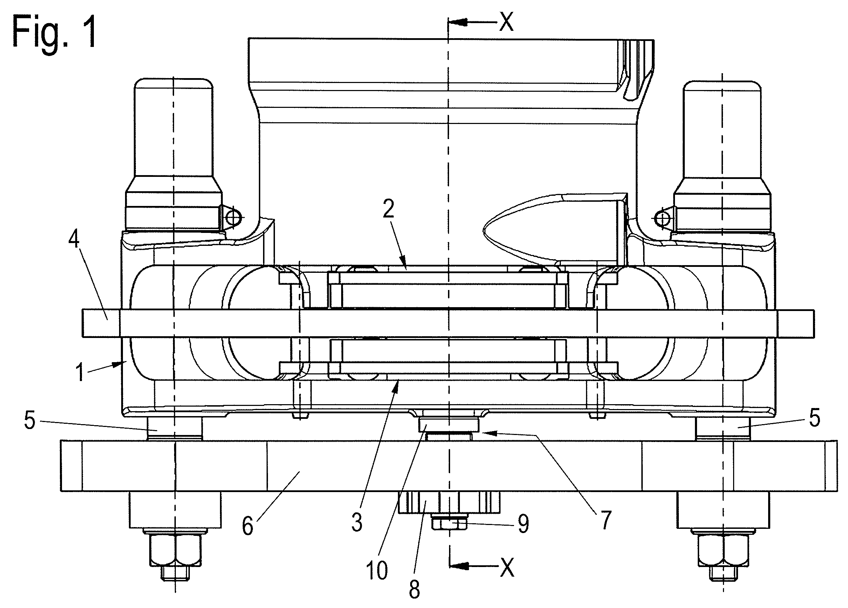

In der Figur 1 ist eine Anordnung einer Scheibenbremse an einem fahrzeugseitig ortsfesten Bremsträger 6 dargestellt, wobei ein eine Bremsscheibe 4 übergreifender Bremssattel 1 der Scheibenbremse, in dem zwei gegen die Bremsscheibe 4 pressbare Bremsbeläge 2, 3 angeordnet sind, auf mit dem Bremsträger 6 verbundenen Führungsholmen 5 relativ zum Bremsträger 6 verschiebbar ist.

In einer dargestellten Nichtfunktionsstellung der Scheibenbremse liegt der Bremssattel 1 an einem Endanschlag 7 an, der zwischen dem Bremssattel 1 und dem Bremsträger 6 positioniert ist.

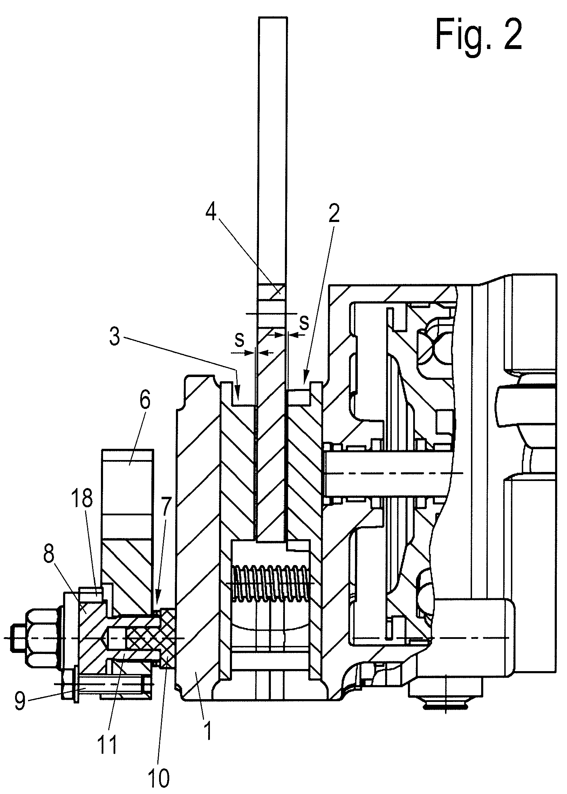

Erfindungsgemäß ist dieser Endanschlag 7 axial verstellbar, wodurch ein Lüftspiel, in Figur 2 mit "S" bezeichnet, zwischen beiden Bremsbelägen 2, 3 und der Bremsscheibe 4 bei einer Erstmontage gleich groß einstellbar ist.

Bei dem in der Figur 2 gezeigten Ausführungsbeispiel weist der Endanschlag 7 ein Verstellelement 8 mit einem Gewindeschaft 11 auf, der in eine Gewindebohrung des Bremsträgers 6 eingedreht ist und in den auf der dem Bremssattel 1 zugewandten Seite ein vorzugsweise aus Kunststoff bestehendes Dämpfungselement 10 eingesetzt ist, an dem der Bremssattel 1 anliegt.

Auf der dem Dämpfungselement 10 gegenüberliegenden Seite ist das Verstellelement 8, das gegenüber dem Gewindeschaft 11 kopfartig verdickt ist, mit über den Umfang verteilten Nuten 18 versehen, in die zur Verstellung des Verstellelementes 8 ein geeignetes Werkzeug einsetzbar ist.

Zur Arretierung des Endanschlages 7 in einer eingestellten Endstellung ist ein Arretierelement in Form einer Konterschraube 9 vorgesehen, die einerseits am Verstellelement 8 anliegt und andererseits in den Bremsträger 6 eingedreht ist.

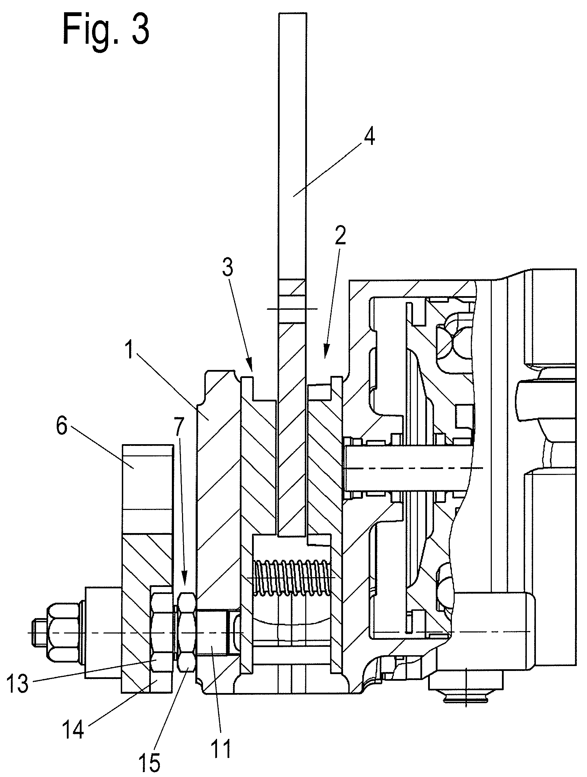

Bei dem in der Figur 3 gezeigten Beispiel ist der Endanschlag 7 als Schraube mit einem Anschlagkopf 13 ausgebildet und in eine Gewindebohrung des Bremssattels 1 eingedreht.

Hier liegt der Anschlagkopf 13 in Endstellung des Bremssattels 1 am Grund einer Ausnehmung 14 des Bremsträgers 6 an, d.h., bei der Zuspannbewegung des Bremssattels 1, in der sich dieser vom Bremsträger 6 entfernt, wird der Endanschlag 7 mitgenommen, so dass sich der Anschlagkopf 13 vom Grund der Ausnehmung 14 löst.

Zur Arretierung des Endanschlages 7 ist auf den Gewindeschaft 11, der im Übrigen bevorzugt ein Feingewinde aufweist, beispielsweise M30x1,5, ist eine Kontermutter 15 vorgesehen, die auf den Gewindeschaft 11 aufgeschraubt ist und nach exakter Einstellung des Lüftspiels "S" gegen den Bremssattel 1 verspannt wird.

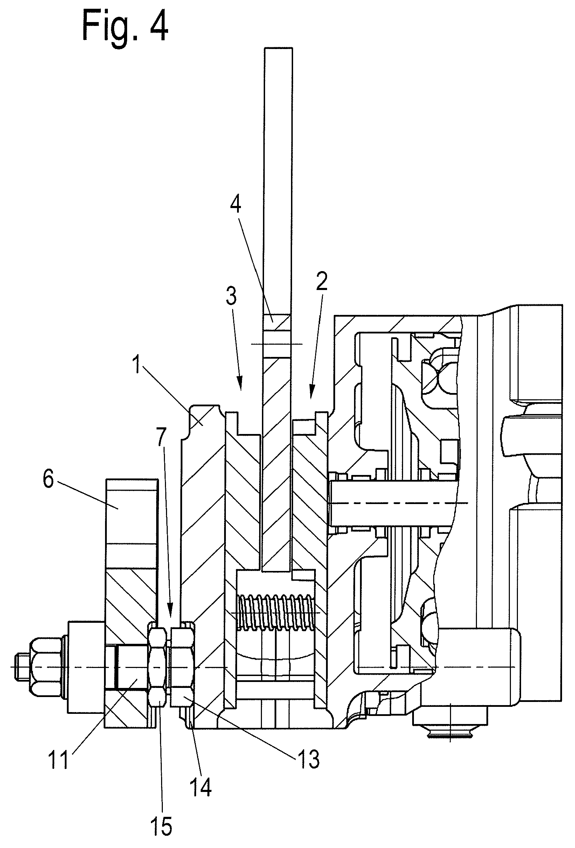

Eine dazu vergleichbare Konstruktion ist in der Figur 4 dargestellt. Hier ist allerdings der als Kopfschraube ausgebildete, mit dem Anschlagkopf 13 versehene Endanschlag 7 mit seinem Gewindeschaft 11 in den Bremsträger 6 eingedreht, während der Anschlagkopf 13 in der dargestellten Nichtfunktionsstellung der Scheibenbremse am Grund der im Bremssattel 1 vorgesehenen Ausnehmung 14 anliegt. Auch hier ist eine Verdrehsicherung durch die Kontermutter 15 vorgesehen.

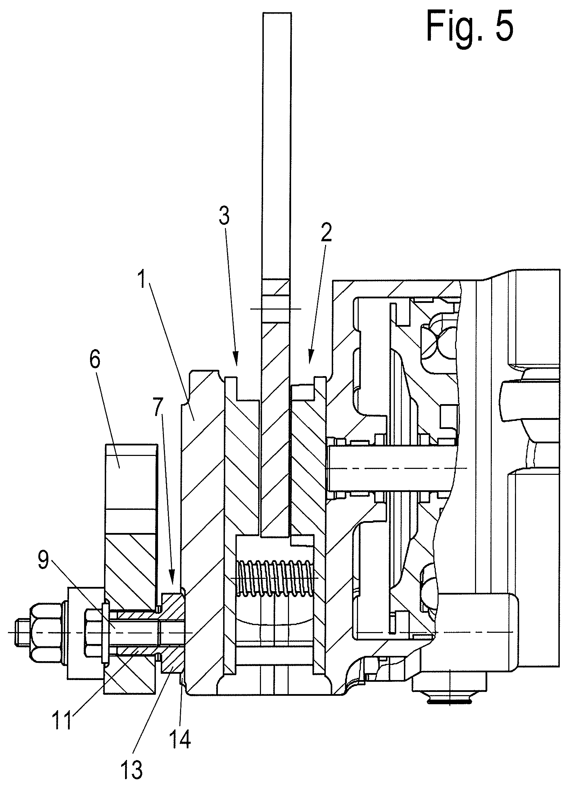

Anstelle der in der Figur 4 gezeigten Kontermutter 15 ist zur Konterung des Endanschlages 7 bei dem in der Figur 5 gezeigten Ausführungsbeispiel zentral in den Gewindeschaft 11 die Konterschraube 9 eingedreht und zwar auf der dem Anschlagkopf 13, der am Grund der Ausnehmung 14 des Bremssattels 1 anliegt, gegenüberliegenden Seite des Bremsträgers 6.

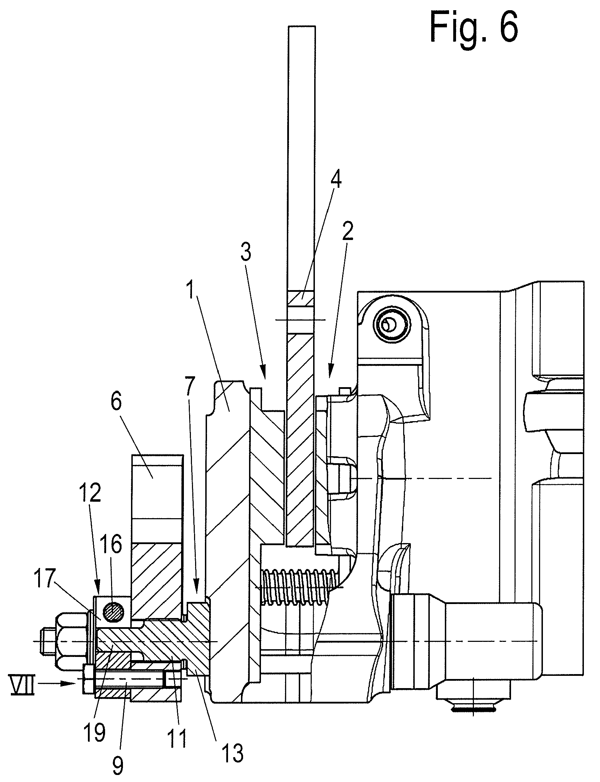

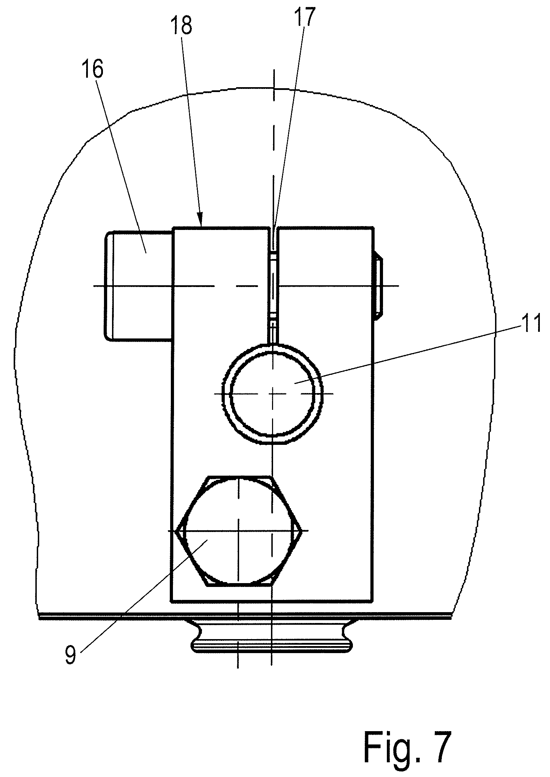

In der Figur 6 und der Figur 7 als Einzelheit ist eine Variante der Befestigung des Endanschlages 7 erkennbar, die aus einem Klemmblock 12 besteht, in dem in einer durch einen Klemmschlitz 17 aufgetrennten Bohrung ein Fortsatz 19 des Gewindeschaftes 11 klemmend gehalten ist. Beide durch den Klemmschlitz 17 gebildeten Hälften des Klemmblocks 12 werden anhand einer Klemmschraube 16 gegeneinander gezogen, unter Verspannung des Fortsatzes 19. Zur Verdrehsicherung des Klemmblockes 12 ist eine Konterschraube 9 durchgeführt und in den Bremsträger 6 eingeschraubt.

### Bezugszeichenliste

- 1: Bremssattel
- 2: Bremsbelag
- 3: Bremsbelag
- 4: Bremsscheibe
- 5: Führungsholm
- 6: Bremsträger
- 7: Endanschlag
- 8: Verstellelement
- 9: Konterschraube
- 10: Dämpfungselement
- 11: Gewindeschaft
- 12: Klemmbock
- 13: Anschlagkopf
- 14: Ausnehmung
- 15: Kontermutter
- 16: Klemmschraube
- 17: Klemmschlitz
- 18: Nuten
- 19: Fortsatz

## Patentansprüche

1. Scheibenbremse mit einem eine Bremsscheibe (4) übergreifender Bremssattel (1), in dem zwei gegen die Bremsscheibe (4) pressbare Bremsbeläge (2, 3) angeordnet sind und der auf mit einem fahrzeugseitigen, ortsfesten Bremsträger (6) verbundenen Führungsholmen (5) relativ zum Bremsträger (6) verschiebbar ist, wobei zwischen dem Bremsträger (6) und dem Bremssattel (1) ein Endanschlag (7) vorgesehen ist, zur Verschiebebegrenzung des Bremssattels (1) beim Verschieben mittels Rückstellfedern in eine Nichtfunktionsstellung, **dadurch gekennzeichnet, dass** der Endanschlag (7) verstellbar am Bremsträger (6) oder am Bremssattel (1) gehalten ist.

2. Scheibenbremse nach Anspruch 1, **dadurch gekennzeichnet, dass** der Endanschlag (7) einen Gewindeschaft (11) aufweist, der in eine Gewindebohrung des Bremsträgers (6) oder des Bremssattels (1) eingeschraubt ist und der endseitig einen Anschlagkopf (13) besitzt.

3. Scheibenbremse nach Anspruch 2, **dadurch gekennzeichnet, dass** sich der Anschlagkopf (13) am Grund einer Ausnehmung (14) des Bremsträgers (6) oder des Bremssattels (1) abstützt.

4. Scheibenbremse nach einem der vorhergehenden Ansprüche, **dadurch gekennzeichnet, dass** der Endanschlag (7) in einer Endstellung verdrehsicher gehalten ist.

5. Scheibenbremse nach einem der vorhergehenden Ansprüche, **dadurch gekennzeichnet, dass** der Endanschlag (7) eine Konterschraube (9) oder eine Kontermutter (15) aufweist, die gegen den Bremsträger (6) oder den Bremssattel (1) verspannt sind.

6. Scheibenbremse nach einem der vorhergehenden Ansprüche, **dadurch gekennzeichnet, dass** der Endanschlag (7) stirnseitig als Anlage ein Dämpfungselement (10) aufweist, das form- und/oder stoffschlüssig mit dem Gewindeschaft (11) verbunden ist.

7. Scheibenbremse nach einem der vorhergehenden Ansprüche, **dadurch gekennzeichnet, dass** der Endanschlag (7) ein Verstellelement (8) mit Nuten (18) aufweist, in die ein Drehwerkzeug einsetzbar ist.

8. Scheibenbremse nach einem der vorhergehenden Ansprüche, **dadurch gekennzeichnet, dass** der Endanschlag (7) zur Verdrehsicherung in einem Klemmblock (12) gehalten ist, wobei sich an den Gewindeschaft (11) ein Fortsatz (19) anschließt, der im Klemmbock (12) eingeklemmt ist.

9. Scheibenbremse nach Anspruch 8, **dadurch gekennzeichnet, dass** der Klemmbock (12) durch eine Konterschraube (9) verdrehsicher am Bremsträger (6) gehalten ist.

10. Scheibenbremse nach einem der vorhergehenden Ansprüche, **dadurch gekennzeichnet, dass** der Endanschlag (7) stufenlos einstellbar ist.

11. Scheibenbremse nach einem der Ansprüche 2 bis 10, **dadurch gekennzeichnet, dass** der Gewindeschaft (11) und die zugeordnete Gewindebohrung ein Feingewinde aufweisen.

## Claims

1. Disc brake with a brake calliper (1) overlapping a brake disc (4), in which calliper two brake linings (2, 3) are disposed that are adapted to be pressed against said brake disc (4), and which is displaceable relative to a brake backing plate (6) on guiding rods (5) connected to the stationary brake backing plate (6) on the vehicle side, wherein an end stop (7) is provided between said brake backing plate (6) and said brake calliper (1) for limitation of the displacement of said brake calliper (1) when the latter is displaced by means of restoring springs into a non-functional position, **characterised in that** said end stop (7) is maintained for adjustment on said brake backing plate (6) or on said brake calliper (1).

2. Disc brake according to Claim 1, **characterised in that** said end stop (7) comprises a threaded shaft (11) that is screwed into a threaded bore of said brake backing plate (6) or said brake calliper (1) and that is provided with a stopping box (13) on its terminal side.

3. Disc brake according to Claim 2, **characterised in that** said stopping box (13) is supported at the bottom of a recess (14) of said brake backing plate (6) or said brake calliper (1).

4. Disc brake according to any of the preceding Claims, **characterised in that** said end stop (7) is securely maintained to prevent rotation in a terminal position.

5. Disc brake according to any of the preceding Claims, **characterised in that** said end stop (7) comprises a counter screw (9) or a lock nut (15), which are biased against said brake backing plate (6) or said brake calliper (1).

6. Disc brake according to any of the preceding Claims, **characterised in that** said end stop (7) comprises a damping element as a positioning component on the face side, which is positively connected and/or joined by material to said threaded shaft (11).

7. Disc brake according to any of the preceding Claims, **characterised in that** said end stop (7) comprises an adjusting element (8) with grooves (18) into which a turning tool can be inserted.

8. Disc brake according to any of the preceding Claims, **characterised in that** said end stop (7) is maintained in a clamping block (12) for securing it against rotation.

9. Disc brake according to Claim 8, **characterised in that** said clamping block (12) is maintained by means of a counter screw (9) on said brake backing plate (6) for securing it against rotation.

10. Disc brake according to any of the preceding Claims, **characterised in that** said end stop (7) is infinitely adjustable.

11. Disc brake according to any of the Claims 2 to 10, **characterised in that** said threaded shaft (11) and the associated threaded bore are provided with a fine-pitch thread.

## Revendications

1. Frein à disque ayant un étrier (1) de frein, dans lequel sont montées deux garnitures (2, 3) de frein pouvant être pressées sur le disque (4) de frein et qui peut, par un bras (5) de guidage relié à un support (6) de frein à poste fixe du côté du véhicule, se déplacer par rapport au support (6) de frein, une butée (7) de fin de course étant prévue entre le support (6) de frein et l'étrier (1) de frein, afin de limiter le déplacement de l'étrier (1) de frein lorsqu'il vient au moyen de ressorts de rappel dans une position de non-fonctionnement, **caractérisé en ce que** la butée (7) de fin de course est maintenue réglable sur le support (6) de frein ou sur l'étrier (1) de frein.

2. Frein à disque suivant la revendication 1, **caractérisé en ce que** la butée (7) de fin de course a une tige (11) filetée, qui se visse dans un taraudage du support (6) de frein ou de l'étrier (1) de frein et qui a, du côté de l'extrémité, une tête (13) de butée.

3. Frein à disque suivant la revendication 2, **caractérisé en ce que** la tête (13) de butée s'appuie au fond d'un évidement (14) du support (6) de frein ou de l'étrier (1) de frein.

4. Frein à disque suivant l'une des revendications précédentes, **caractérisé en ce que** la butée (7) de frein de course est maintenue, sans pouvoir tourner, dans une position d'extrémité.

5. Frein à disque suivant l'une des revendications précédentes, **caractérisé en ce que** la butée (7) de fin de course a une contrevis (9) ou un contre-écrou (15), qui sont serrés contre le support (6) de frein ou contre l'étrier (1) de frein.

6. Frein à disque suivant l'une des revendications précédentes, **caractérisé en ce que** la butée (7) de fin de course a, du côté frontal, comme agencement, un élément (10) d'amortissement, qui est relié à complémentarité de forme et/ou de matière à la tige (11) filetée.

7. Frein à disque suivant l'une des revendications précédentes, **caractérisé en ce que** la butée (7) de fin de course a un élément (8) de réglage ayant des rainures (18), dans lesquelles peut être inséré un outil à tourner.

8. Frein à disque suivant l'une des revendications précédentes, **caractérisé en ce que** la butée (7) de fin de course est maintenue, pour l'empêcher de se tordre, dans un support (12) de serrage, un prolongement (19), qui est serré dans le support (12) de serrage, se raccordant à la tige (11) filetée.

9. Frein à disque suivant la revendication 8, **caractérisé en ce que** le support (12) de serrage est maintenu, sans pouvoir se tordre, sur le support (6) de frein par une contrevis (9).

10. Frein à disque suivant l'une des revendications précédentes, **caractérisé en ce que** la butée (7) de fin de course est réglable sans palier.

11. Frein à disque suivant l'une des revendications 2 à 10, **caractérisé en ce que** la tige (11) filetée et le taraudage associé ont un filetage fin.
